# EUROPEAN PATENT APPLICATION

(11) **EP 0 528 549 A1**
(43) Date of publication of application: **24.02.1993**
(21) Application number: 92306641.9
(22) Date of filing: 20.07.1992
(51) Int. Cl.: C01B 11/04, B01D 61/00

(54) **Separation of hypohalous acids from aqueous solutions thereof containing halide ions**

(30) Priority: 19.08.1991 GB 9117861
(71) Applicant: IMPERIAL CHEMICAL INDUSTRIES PLC, London SW1P 3JF (GB)
(72) Inventor: Ziman, Harry John, Helsby, Cheshire WA6 0NE (GB); Brattan, Keith, Great Boughton, Chester (GB); Dring, Ian Stuart, Moulton, Northwich CW9 8QE (GB)
(74) Representative: Thomas, Ieuan

(57) **Abstract**

A process for the separation of a hypohalous acid from an aqueous solution of a hypohalous acid containing halide ions by contacting the aqueous solution of the hypohalous acid containing halide ions with a first face of a porous membrane of a hydrophobic material and contacting an aqueous liquid with a second face of the membrane.

The hypohalous acid is preferably hypochlorous acid and the aqueous liquid is preferably sodium hydroxide.

## Description

This invention relates to a process for the separation of a hypohalous acid, for example hypochlorous acid, from an aqueous solution of a hypohalous acid which also contains halide ions, for example an aqueous solution of hypochlorous acid containing chloride ions, and in particular to a process for the preparation of hypohalous acids or an aqueous solution of an alkali metal or alkaline earth metal salt thereof, for example sodium hypochlorite, which is substantially free of halide ions, for example chloride ions.

Aqueous sodium hypochlorite solution is widely used in cleaning and sterilising applications. For example, it is used to sterilise waste water, for example in sewage treatment, and it is used to sterilise swimming pool water. Aqueous sodium hypochlorite solution is furthermore a convenient source of chlorine and is widely used in many domestic applications as a cleaning and sterilising agent.

Aqueous sodium hypochlorite solution is conventionally produced by chlorinating aqueous sodium hydroxide solution according to the equation:

2 NaOH + Cl₂ -------------> NaOCl + NaCl + H₂O.

For example, aqueous NaOH solution produced by electrolysis of sodium chloride, for example in a membrane cell, may be chlorinated.

The product of chlorinating such an aqueous sodium hydroxide solution according to the aforementioned equation is thus an aqueous solution which contains equivalent molar amounts of sodium hypochlorite and sodium chloride.

Aqueous sodium hypochlorite solution may also be produced by chlorinating diaphragm cell liquor, that is a solution which contains sodium hydroxide and sodium chloride and which is produced by electrolysis of sodium chloride brine in a diaphragm cell.

Sodium hypochlorite is relatively unstable and has a tendency to decompose and the presence of sodium chloride in the aforementioned solution is believed to accelerate this decomposition. Furthermore, the presence of chloride ions in hypochlorite solutions also leads to the formation of undesirable gaseous chlorine when the solution is contacted with acidic media. In addition, the elimination of sodium chloride from sodium hypochlorite solutions enables other salts to be dissolved in the sodium hypochlorite solution thus permitting the development of new cleaning formulations. Thus, it is desirable to produce sodium hypochlorite solutions which are substantially free of sodium chloride.

Processes have been proposed for the production of hypochlorous acid solutions which contain a smaller amount of chloride ions than do sodium hypochlorite solutions which are produced by reacting chlorine with sodium hydroxide solutions, and from which sodium hypochlorite may be produced simply by reaction with sodium hydroxide.

In US Patent Specification No. 4 146 578 there is described a process for the production of hypochlorous acid in which gaseous chlorine is reacted with an aqueous solution of alkali metal hydroxide in a finely divided mist form at an elevated temperature sufficient to prevent condensation of the gaseous product. The gaseous hypochlorous acid product is immediately separated from the resulting by-product solid alkali metal chloride as it is formed and is then scrubbed with water to form an aqueous hypochlorous acid solution.

In US Patent Specification 4 147 761 there is described a process for the production of hypochlorous acid in a so-called sweep reactor in which gaseous chlorine is passed rapidly across the surface of an agitated aqueous solution of alkali metal hydroxide at a reduced temperature. The resulting gaseous product mixture of hypochlorous acid, chlorine monoxide, and unreacted chlorine is conveyed from the reactor to a suitable scrubber to produce an aqueous hypochlorous acid solution. The aqueous reaction product from the sweep reactor is a suspension of alkali metal chloride in alkali metal hypochlorite. This suspension is then filtered to separate the suspended alkali metal chloride and form a clarified solution of alkali metal hypochlorite. Whilst filtration may remove a proportion of the alkali metal chloride, it does not remove dissolved alkali metal chloride. Accordingly, a more efficient removal of alkali metal chloride may be desired.

Moreover, in the processes proposed in the aforementioned US Patent Specifications, the separation step by which the hypochlorous acid is separated from by-products, in particular chloride ions and chlorine, involves the use of bulky scrubbing towers and the use of a gas stream to carry the gaseous hypochlorous acid. The provision of the gas stream requires the input of large amounts of energy thereby reducing the commercial viability of those processes.

Furthermore, these processes all relate to the production of hypochlorous acid from which hypochlorite salt solutions may be produced. Hypochlorite salt solutions may not be directly be produced therefrom.

The present invention provides a simple and economical process for the separation of hypochlorous acid from hypochlorous acid solutions containing chloride ions. The process of the present invention has a low energy input requirement and may be carried out in a compact apparatus. Furthermore, the process of the present invention may be incorporated into the process for the production of hypochlorite solutions such that the direct product of the separation is a hypochlorite solution which contains substantially less, when compared to conventionally produced sodium hypochlorite, and may even be substantially free of, chloride ions.

Furthermore, the process of the present invention may be incorporated in a process for the production of an aqueous sodium hypochlorite solution which is substantially free of sodium chloride from an aqueous solution of sodium hypochlorite containing a substantial amount of sodium chloride and which may have been produced by conventional processes.

According to the present invention there is provided a process for the separation of a hypohalous acid from an aqueous solution of a hypohalous acid containing halide ions which process comprises contacting the aqueous solution of the hypohalous acid containing halide ions with a first face of a porous membrane of a hydrophobic material and contacting an aqueous liquid with a second face of the membrane.

The hypohalous acid will usually be hypochlorous or hypobromous acid. Typically however the hypohalous acid is hypochlorous acid since the most commonly available and commercially significant hypohalous acid is hypochlorous acid.

According to a first preferred embodiment of the invention there is provided a process for the separation of hypochlorous acid from an aqueous solution of hypochlorous acid containing chloride ions which process comprises contacting the aqueous solution of hypochlorous acid containing chloride ions with a first face of a porous membrane of a hydrophobic material and contacting an aqueous liquid with a second face of the membrane.

The invention will be described hereinafter with reference to the separation of hypochlorous acid although the invention is not to be so limited.

In the process of the invention the aqueous hypochlorous acid solution containing chloride ions is contacted with a first face of the porous membrane and an aqueous liquid is contacted with a second face of the membrane. The porous membrane is made of a hydrophobic material and in operation of this first preferred embodiment of the invention volatile hypochlorous acid is transferred through the pores of the membrane from the aqueous hypochlorous acid solution containing chloride ions to the aqueous liquid. As the membrane is hydrophobic there is little or no transference of the aqueous hypochlorous acid solution or chloride ions, or of the aqueous liquid across the membrane.

The membrane which is used in the process of the invention is suitably in the form of a film or sheet, that is in a form which has two faces each of substantial surface area and with which the hypochlorous acid solution containing chloride ions and the aqueous liquid may be contacted. The thickness of the membrane is not particularly critical. It may, for example, have a thickness in the range 1 micron to 10 mm, e.g. in the range 100 microns to a few mm, e.g. 3mm. The membrane is porous at least to the extent that it is permeable to gaseous hypochlorous acid, and it may have a widely-varying porosity, for example, a porosity as low as 10%, that is 10% of the volume of the membrane may be comprised of pores, or it may have a porosity of as high as 90%, although in general the porosity will be in the range from about 30% to about 70% or 80%. The sizes of the pores in the membrane may vary over a wide range provided that, for a particular material of construction of the membrane and for a membrane of a given thickness and porosity, the sizes of the pores are not so great that the membrane becomes permeable to the aqueous hypochlorous acid solution containing chloride ions or to the aqueous liquid. Indeed the properties of the membrane are to some extent interactive in that, for a given hydrophobic material, the porosity, the sizes of the pores and thickness of the membrane should be chosen to achieve the desired effect of transference of gaseous hypochlorous acid across the membrane from the aqueous hypochlorous acid solution containing chloride ions to the aqueous liquid with little or no transference of the hypochlorous acid solution containing chloride ions or of the aqueous liquid across the membrane.

The membrane is made of a hydrophobic material, that is of a material which is not wetted to any substantial extent by the aqueous hypochlorous acid solution containing chloride ions nor by the aqueous liquid. Suitable hydrophobic materials are fluorine-containing organic polymeric materials, including a tetrafluoroethylene/hexafluoropropylene copolymer, and polyvinylidene fluoride. A preferred hydrophobic material is polytetrafluoroethylene, and a particularly suitable membrane for use in the process of the invention is a porous membrane in the form of a film made of polytetrafluoroethylene and sold under the trade name, "Gore-Tex" by W L Gore and Associates Inc. This membrane is made by rapid stretching of a sheet of polytetrafluoroethylene in order to create porosity, followed by heat treatment in order to sinter the polytetrafluoroethylene in the resultant porous film.

The temperature of the aqueous hypochlorous acid solution containing chloride ions which is contacted with the first face of the membrane is preferably elevated since hypochlorous acid is a volatile gas and the use of slightly elevated temperature facilitates efficient transfer of the hypochlorous acid across the membrane. Typically the temperature of the hypochlorous acid solution is in the range from about 0°C to about 110°C, and preferably in the range from about 30°C to about 80°C.

The aqueous liquid with which the second face of the membrane is contacted may be water so that the product of the process of the invention is aqueous hypochlorous acid substantially free of chloride ions. Alternatively the aqueous liquid may be a solution of an alkali metal hydroxide, for example sodium or potassium hydroxide, or a solution of an alkaline earth metal hydroxide, for example calcium hydroxide and the product of the process of the invention may be an aqueous alkali metal or alkaline earth metal hypochlorite solution substantially free of chloride ions.

According to a second preferred embodiment of the invention there is provided a process for the production of an aqueous alkali metal or alkaline earth metal hypochlorite solution substantially free of chloride ion from an aqueous solution of hypochlorous acid containing chloride ions which process comprises contacting the aqueous hypochlorous acid solution containing chloride ions with a first face of a porous membrane of a hydrophobic material and contacting an aqueous solution of an alkali metal or alkaline earth metal hydroxide with a second face of the membrane.

The process of the invention is particularly useful for the production of sodium hypochlorite solutions which are substantially free of sodium chloride and in a third preferred embodiment of the invention the aqueous hypochlorous acid solution containing chloride ions is contacted with a first face of a porous membrane of a hydrophobic material and an aqueous solution of sodium hydroxide is contacted with a second face of the membrane.

The temperature of the aqueous liquid in contact with the second face of the membrane, for example the aqueous solution of sodium hydroxide into which the hypochlorous acid is absorbed by transfer across the membrane may be varied within wide limits. Where the aqueous liquid is water, it is generally preferred that the temperature of the water is lower than that of the aqueous hypochlorous acid solution which is contacted with the first face of the membrane since a temperature gradient may be set up which encourages the diffusion of gaseous hypochlorous acid across the membrane. Where however the aqueous liquid is an aqueous solution of an alkali metal or alkaline earth metal hydroxide, the influence of a temperature gradient upon the transfer of gaseous hypochlorous acid across the membrane is not as strong and the temperature of the aqueous alkali metal of alkaline earth metal hydroxide solution may be about the same as that of the aqueous hypochlorous acid solution which is contacted with the first face of the membrane.

Typically, the temperature of the aqueous liquid, for example the aqueous sodium hydroxide solution may be in the range from about 0°C to about 110°C, and preferably the temperature is in the range from about 0°C to about 80°C.

Furthermore the decomposition of sodium hypochlorite to sodium chlorate is encouraged by relatively low but alkaline pH, for example at a pH of between about 7 and 8, and it is therefore generally preferred that the concentration of the sodium hydroxide solution into which the gaseous hypochlorous acid is absorbed is at least 1% by weight sodium hydroxide solution and more preferably at least 15% by weight sodium hydroxide solution in order that a high pH, for example a pH of at least 10, is maintained in order to avoid the production of sodium chlorate.

The aqueous sodium hypochlorite solution which is produced in the process of the invention is substantially free of sodium chloride. Conventionally produced sodium hypochlorite solutions typically contain, on a % w/w basis, about 1.0:0.8 hypochlorite to chloride. The aqueous sodium hypochlorite solution substantially free of sodium chloride produced y the process of the present invention may contain hypochlorite and chloride in the ratio of at least 3:1, preferably at least 10:1. Indeed we have obtained a product containing hypochlorite and chloride in a ratio of over 15:1.

For commercial use, the sodium hypochlorite solution which is produced by the process of the invention should also be sufficiently concentrated in sodium hypochlorite. The concentration of sodium hypochlorite in the product solution is preferably greater than 10 wt %, especially greater than 15 wt %, and with such solutions the concentration of sodium chloride is preferably less than 5 wt %, more preferably less than 2 wt% and especially less than 1 wt %.

The hypochlorous acid containing chloride ions for use in the process of the present invention may itself be produced directly by reacting chlorine with water according to the equation:

Cl₂ + H₂O ---------> HOCl + H⁺ + Cl-.

Alternatively the hypochlorous acid solution containing chloride ions may be obtained from a solution of alkali metal hypochlorite containing chloride ions. Accordingly the process of the present invention may be incorporated in a process for the production of hypochlorous acid, or an aqueous solution of an alkali metal of alkaline earth metal salt thereof, from an aqueous alkali metal or alkaline earth metal hypochlorite solution containing chloride ions.

According to a further preferred embodiment of the invention there is provided a process for the production of hypochlorous acid or an aqueous solution of an alkali metal or alkaline earth metal salt thereof which is substantially free of chloride ions, from an alkali metal hypochlorite solution containing chloride ions which process comprises (a) converting the hypochlorite to hypochlorous acid and (b) contacting the hypochlorous acid solution from step (a) with a first face of a porous membrane of a hydrophobic material and contacting an aqueous liquid with a second face of the membrane.

The alkali metal or alkaline earth metal hypochlorite solution containing chloride ions may be prepared by any known process for the production of hypochlorite salts.

In this further preferred embodiment of the invention, the aqueous alkali metal or alkaline earth metal hypochlorite solution containing chloride ions may be for example, sodium or potassium hypochlorite or it may be calcium hypochlorite. However, sodium hypochlorite is produced on a vast scale around the world and the aqueous alkali metal or alkaline earth metal hypochlorite solution containing chloride ions will usually be sodium hypochlorite. Furthermore, sodium hypochlorite is the metal hypochlorite for which there is most demand commercially and aqueous sodium hypochlorite solution substantially free of chloride ions is the preferred aqueous alkali metal or alkaline earth metal hypochlorite solution product of the process.

However, since in this further preferred embodiment of the process, the starting material is converted to hypohalous acid in step (a) which is then converted back into hypohalite in step (b), any alkali metal or alkaline earth metal hypochlorite may be produced from any alkali metal or alkaline earth metal hypochlorite containing chloride ions simply by the choice of hydroxide used as the aqueous liquid which is contacted with the second face of the membrane in step (b). However, in the case of alkaline earth metal hydroxides, the alkaline earth metal hydroxide will usually be calcium hydroxide since the hydroxides of other alkaline earth metals are only very sparingly soluble in water.

The invention will be described hereinafter with reference to the production of sodium hypochlorite solution substantially free from chloride ions from sodium hypochlorite solutions containing chloride ions, although the invention is not to be so limited.

The starting aqueous sodium hypochlorite solution containing sodium chloride may be a solution which has been obtained by the chlorination of sodium hydroxide in a conventional sodium hypochlorite production plant. Alternatively the starting solution may be generated in situ by reacting chlorine with sodium hydroxide and feeding the product of this reaction to the process of the present invention.

According to a still further preferred embodiment of the invention there is provided a process for the production of sodium hypochlorite which process comprises (a) chlorinating a sodium hydroxide solution to produce a sodium hypochlorite solution containing sodium chloride, (b) converting the sodium hypochlorite into hypochlorous acid and (c) contacting the hypochlorous acid solution from step (b) with a face of a porous membrane of a hydrophobic material and contacting an aqueous sodium hydroxide with an opposite face of the membrane.

The aqueous sodium hypochlorite solution containing sodium chloride may be converted to hypochlorous acid by reducing the pH of the aqueous sodium hypochlorite solution.

In an aqueous solution of sodium hypochlorite containing sodium chloride, the relative concentrations of hypochlorite ions and hypochlorous acid may be altered by adjusting the pH of the solution to the desired level. It is known that the concentration of hypochlorous acid in the solution may be increased to concentrations of greater than 95% relative to the initial hypochlorite concentration.

The particular pH to which the starting solution should be adjusted depends on several factors, including the initial concentration of sodium chloride in the solution and the particular hypohalite ion involved. The optimisation of the pH and thus the production of a solution in the aforementioned second step (b) of the process according to the still further embodiment of the invention which contains as high a concentration of hypochlorous acid as possible and as low a concentration of chlorine and chlorate as possible is a significant advantage, and allows highly efficient separations in the subsequent separation step (c) of the process.

Typically, sodium hypochlorite solutions containing sodium chloride produced commercially by reacting chlorine with sodium hydroxide, contain about 130g/litre of sodium chloride. However, solutions containing greater concentrations of sodium chloride, for example up to 250g/litre and even as much as 300g/litre or smaller concentrations of sodium chloride, for example less than 100g per litre and even as little as 10g/litre, may also be employed as starting solutions in the process of the invention.

Typically, in the second step (b) of the process according to the still further embodiment of the invention the pH of the starting solution may be adjusted to between 2 and 10, and where the starting solution contains about 200g/litre sodium chloride, the pH is preferably adjusted to between 4 and 9 since at pH's below 4 there may be some undesirable chlorine also present in the solution, and more preferably between 6 and 9, especially a pH between about 7 and about 9.

The pH of the starting solution may be adjusted by adding any of the commonly available acids, for example sulphuric acid or hydrochloric acid. However, a particularly preferred acid to be added is hydrochloric acid since the ions which are then added to the solution are the same as those already present in solution and no side reactions are thereby created.

Alternatively, the concentration of hypochlorous acid in the starting solution may be optimised by adding chlorine to the solution of sodium hypochlorite containing chloride ions.

We have also found that the efficiency with which hypochlorous acid is separated from chloride ion in step (c) of the process is dependent upon the concentration of available chlorine in the aqueous hypochlorous acid solution which is contacted with the first face of the membrane in step (c) of the still further embodiment of the process. We generally prefer that the concentration of available chlorine in the aqueous hypochlorous acid solution contacted with the first face of the membrane is less than 15 % wt/wt, more preferably less than 10% wt/wt and especially less than 8 %wt/wt. It is generally not beneficial to employ an aqueous hypochlorous acid solution having a concentration of available chlorine of less than 1% wt/wt.

The concentration of available chlorine in the aqueous hypochlorous acid solution contacted with the fist face of the membrane may be reduced to the level required by, for example diluting the pH adjusted hypochlorous acid solution with water or brine. Alternatively, means may be provided for removing some of the available chlorine from the solution prior to contact with the membrane. Thus, for example an air stripper may be employed by which the concentration of gaseous chlorine and hypochlorous acid dissolved in the solution is reduced.

After optimising the concentration of the hypochlorous acid in the solution, the concentration of hypochlorous acid in the solution may be as great as 90% expressed as a molar percentage of the total available chlorine, that is hypochlorite, chlorate, chlorine and hypochlorous acid, in the solution, and even as high as 98% of the total available chlorine in the solution.

The temperature at which the pH optimisation is carried out may be within wide limits but preferably the treatment is carried out at a slightly reduced temperature in order to minimise the chlorate formation. Preferably however, and as previously described, the solution is then heated to a slightly elevated temperature prior to step (c) of the process.

Typically the temperature at which the pH optimisation is carried out is in the range from about -10°C to about 110°C, and preferably in the range from about -10°C to about 80°C.

The process of the present invention may be effected in an apparatus which comprises a pair of compartments separated by a porous membrane, a first compartment being provided with means for charging the hypochlorous acid solution thereto and with means for removing the hypochlorous acid-depleted solution therefrom, and a second compartment being provided with means for charging the aqueous liquid thereto and with means for removing the hypochlorous acid or hypochlorite solution, substantially free of chloride ions therefrom. The aforementioned means may be provided by suitable ports, appropriately provided in the walls of the compartments. The compartments suitably have a relatively small dimension in a direction perpendicular to the membrane such that the solutions in the appropriate compartments are in the form of relatively thin films. The apparatus may thus have the form of a filter press, and the compartments may, for example, have a dimension of 0.2 mm to 10mm, e.g. 1mm to 10mm, in a direction perpendicular to the membrane.

The effectiveness of the membrane in transferring gaseous hypochlorous acid therethrough depends on, inter alia, the surface area of the membrane with which the aqueous hypochlorous acid solution and the aqueous liquid sodium hydroxide solution are in contact, on the time for which the solutions are in contact with the membrane, the flow rates of the solutions, the mixing within each of the solutions and the temperature. In a preferred embodiment of the apparatus, each compartment may be provided with a baffle or a plurality of baffles, or a channel or a plurality of channels which serve to direct the flow of aqueous hypochlorous acid solution, and of sodium hydroxide, in an extended path over the surfaces of the porous membrane thus prolonging the contact between the membrane and the solutions and thus increasing the extent of transference of hypochlorous acid across the membrane. Additionally a mesh may be provided within each of the compartments to increase the turbulence of and mixing within each of the solutions. The aqueous hypochlorous acid solution containing chloride ions and the aqueous liquid are preferably caused to flow through the apparatus, and more preferably, where the aqueous liquid is water, they are caused to flow through the apparatus in a counter-current manner. Where the aqueous liquid is an alkali metal or alkaline earth metal hydroxide solution, the solutions may be caused to flow in a co-current or counter-current manner.

It will be appreciated that where it is desired to produce large volumes of aqueous sodium hypochlorite solution from aqueous sodium hypochlorite solutions containing sodium chloride, the apparatus may need to comprise a porous membrane of substantial surface area. Furthermore, if the apparatus were to comprise a single pair of compartments separated by a porous membrane the apparatus may need to be of excessive size, and in particular to have large overall dimensions of height and length. In order that the apparatus should not have such large overall dimensions it is preferred that the apparatus comprises a plurality of pairs of compartments, each pair being separated by a porous membrane. The compartments may take the form of a filter press. The first compartments of the pairs of compartments may be in fluid-flow communication, e.g. by means of apertures in the walls of the compartments, and the second compartments of the pairs of compartments may be in communication, e.g. by means of apertures in the walls of the compartments. In use of this preferred form of apparatus the aqueous hypochlorous acid solution containing chloride ions may be passed through the first compartments sequentially and hypochlorous acid depleted solution may be removed therefrom, and the aqueous liquid may be passed through the second compartments sequentially and the aqueous hypochlorous acid or hypochlorite solution may be removed therefrom. Such a preferred form of apparatus, particularly when in the form of a filter press, may be associated with, e.g. affixed to, the apparatus in which the sodium chloride containing sodium hypochlorite starting solution was produced.

The invention is illustrated, but not limited, with the aid of the following drawings.

In the drawings:
Figure 1 is an isometric exploded view of a membrane unit in which the process may be effected, and
Figure 2 is a diagrammatic representation of the apparatus in which the preferred embodiment of the invention may be effected.

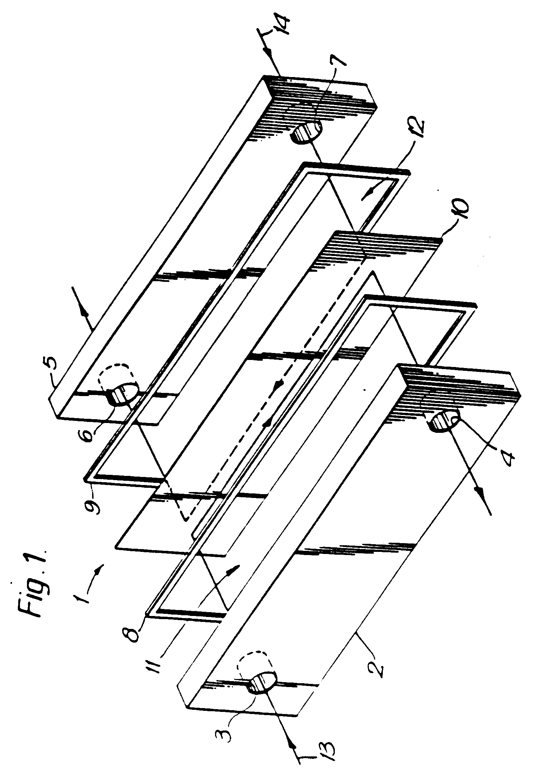

In Figure 1 a membrane unit 1 comprises an end plate 2 of a plastics material, which may be an acrylonitrile- butadiene-styrene copolymer, provided with two apertures 3, 4; an end plate 5 of a plastics material provided with two apertures 6, 7; two frame-like gaskets 8, 9, also of plastics material disposed between the end plates 2 and 5, and a porous hydrophobic membrane in the form of a film of polytetrafluoroethylene 10 disposed between the gaskets 8, 9. The porous hydrophobic membrane 10 is a material sold under the trade name "Gore-Tex' by W L Gore and Associates Inc. The membrane 10 overlaps the facing surfaces of the gaskets 8, 9 but does not entirely cover the facing surfaces of the gaskets 8 and 9.

The membrane unit 1 is assembled by positioning the membrane 10 between the gaskets 8, 9, and sealing the gaskets 8, 9 to each other by use of an adhesive, by heat sealing or by compression of the unit. The gaskets 8, 9 are then sealed to the end plates 2, 5 respectively, also by use of an adhesive, by heat sealing or by compression. The assembled membrane unit comprises two compartments 11, 12.

The aperture 3 is connected to a source of aqueous hypochlorous acid solution containing chloride ions (not shown), for example, to the outlet of a vessel in which the pH of an aqueous sodium hypochlorite solution containing sodium chloride has been adjusted. The aperture 4 is connected to a stock tank (not shown) for the depleted aqueous hypochlorous acid solution. The aperture 7 is connected to a source of aqueous liquid (not shown), for example to a source of aqueous sodium hydroxide, and aperture 6 is connected to a stock tank (not shown) for the aqueous sodium hypochlorite solution substantially free of sodium chloride which is produced in the membrane unit 1.

In operation aqueous hypochlorous acid solution containing chloride ions is charged to compartment 11 via aperture 3, the solution is passed through the compartment in the direction indicated by the arrowed line 13, and depleted aqueous hypochlorous acid solution is removed from the compartment via aperture 4. Aqueous sodium hydroxide solution is charged to compartment 12 via aperture 7, the aqueous sodium hydroxide solution is passed through the compartment in the direction indicated by the arrowed line 14, and aqueous sodium hypochlorite solution substantially free of sodium chloride is removed from the compartment via aperture 6.

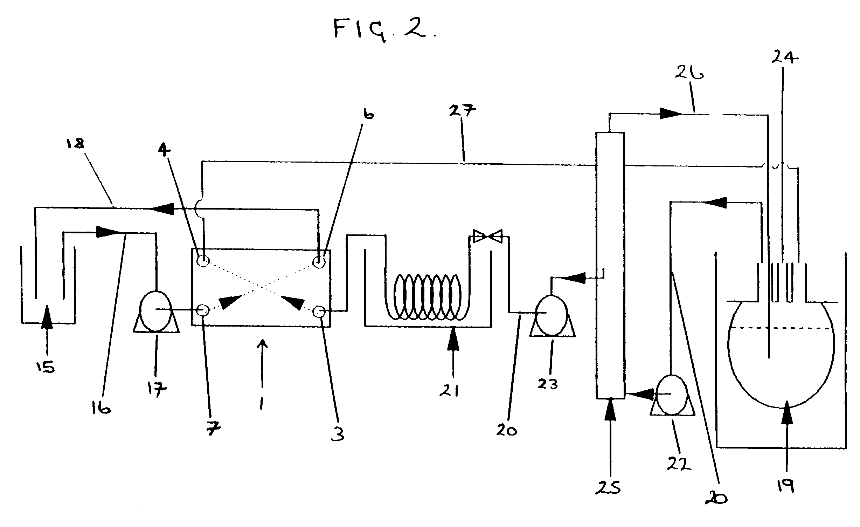

In Figure 2, the numerals 1-7 have the meanings ascribed to them in relation to Figure 1.

The apparatus further comprises a sodium hydroxide reservoir 15 from which sodium hydroxide is fed to the inlet 7 through line 16 and pump 17, and to which sodium hydroxide is recycled from outlet 6 through line 18.

In operation, the aqueous sodium hypochlorite solution is held in reservoir 19 in which it is adjusted to the required pH and from where it is fed to the inlet 3 through line 20 and pump 23. The reservoir 19 is provided with an automatic pH control unit 24 comprising a pH meter, a feed of sodium hydroxide and a feed of hydrochloric acid. A water bath heater 21 is provided prior to inlet 3 to heat the hypochlorous acid solution prior to the membrane unit 1. Aqueous hypochlorous acid-depleted solution is recycled from outlet 4 through line 27 to the reservoir 19. In an alternative embodiment, the aqueous hypochlorous acid-depleted solution may be passed from outlet 4 to a collection reservoir (not shown) rather than recycled to the reservoir 19.

The apparatus may further optionally comprise an air stripper 25 provided before the heater 21 and through which the aqueous hypochlorous acid solution from the reservoir 19 is fed by pump 22 prior to the heater 21. Gases stripped from the solution in the air stripper 25 are fed back through line 26 to the reservoir 19. The stripped solution is fed via outlet 28 to the heater 21 via pump 23.

The invention is further illustrated by the following examples.

### Example 1.

This example illustrates the use of sodium hydroxide as the aqueous liquid in the process of the present invention.

Gaseous hypochlorous acid was separated from a 15% by weight solution of sodium hypochlorite containing 12% by weight sodium chloride into a 10% by weight solution of sodium hydroxide in an membrane unit and apparatus as shown generally in the figures and described above. The overall external dimensions of the membrane unit were 460mm x 190mm. The internal dimensions of the compartments 11 and 12 in contact with the membrane were 260mm x 100mm. The depth of the compartments was 4mm. Each of the compartments 11 and 12 was provided with a cPVC (chlorinated polyvinyl chloride) mesh. The porous polytetrafluoroethylene membrane had a thickness of 300 microns, an overall porosity of 78%, and an average pore diameter of 0.2 micron.

Two litres of sodium hypochlorite solution containing sodium chloride with a pH of 7 was thermostatically maintained at 60°C in a reservoir. The reservoir was connected via a pump to aperture 3. The solution was caused to flow through compartment 11 in the direction indicated by the arrowed line 13 at a flow rate of 25 litres per hour. The solution was removed from the compartment via aperture 4 and returned to the reservoir from where it was recirculated through the compartment 11.

Two litres of 10% by weight sodium hydroxide solution was thermostatically maintained at 5°C in a reservoir. The reservoir was connected via a pump to aperture 7. The solution was caused to flow through compartment 12 in the direction indicated by the arrowed line 14 at a flow rate of 25 litres per hour. The solution was removed from the compartment via aperture 6 and returned to the reservoir from where it was recirculated through the compartment 12.

The solutions were recirculated through the apparatus for 6 hours after which time the sodium hydroxide solution was analysed for its sodium hypochlorite and sodium chloride contents. The sodium hydroxide solution contained 2000mg/litre of sodium hypochlorite and 190 mg/litre of sodium chloride. Conventionally produced hypochlorite containing 2000mg/litre of hypochlorite contains 1600 mg/litre of sodium chloride.

### EXAMPLE 2.

This example illustrates the use of water as the aqueous liquid in the process of the present invention.

The procedure described in Example 1 was repeated except that two litres of water were caused to flow through compartment 12 in place of sodium hydroxide. The solutions were recirculated for 2 hours. After this time the water was analysed and found to contain 500mg/litre hypochlorous acid expressed as sodium hypochlorite and 60mg/litre hydrochloric acid expressed as sodium chloride. Conventionally produced hypochlorous acid containing 500mg/litre hypochlorous acid contains 390mg/litre hydrochloric acid.

In the following examples, 3 to 10 the same apparatus as example 1 was employed except that a water bath heater was employed before the membrane unit in order to heat the pH adjusted hypochlorous acid solution fed to compartment 11 via aperture 3, and that the hypochlorous acid solution removed from compartment 11 was collected in a collection reservoir rather than being recirculated to the hypochlorous acid feed reservoir.

### EXAMPLE 3.

The procedure of example 1 was repeated except that 48 litres of the sodium hypochlorite solution containing sodium chloride was maintained at a pH of 8.5 and thermostatically maintained at 0°C in the reservoir and the solution was heated to 40°C by passage through a water bath prior to entry to compartment 11.. The flow rate of the solution through compartment 11 was 20 l/hour. After a single pass through compartment 11, the solution was collected in a collection reservoir.

Two litres of 10% by weight sodium hydroxide solution was thermostatically maintained at 40°C in a reservoir. The flow rate of the solution through compartment 12 was 20l/hour. The sodium hydroxide solution was recirculated as in example 1.

The sodium hydroxide solution was recirculated through compartment 12 until all the sodium hypochlorite solution had been passed through compartment 11 and collected in the collection reservoir. The sodium hydroxide solution was then analysed for its sodium hypochlorite and sodium chloride contents. The sodium hydroxide solution contained 52464mg/litre of sodium hypochlorite and 13000 mg/litre of sodium chloride. Conventionally produced hypochlorite containing 52646mg/litre of hypochlorite contains 43020 mg/litre of sodium chloride.

### EXAMPLES 4 to 6.

Three runs were carried out under identical conditions except that in each run the temperature to which the hypochlorite solution was heated by passage through a water bath prior to feed to compartment 11 was as follows:
Example 4 60°C
Example 5. 20°C
Example 6. 0°C
The procedure described for example 3 was repeated for each run except that 10 litres of the hypochlorite solution adjusted to pH 8 in the reservoir was caused to flow through compartment 11 at a flow rate of 10 l/hour, and the flow rate of recirculating sodium hydroxide was 10l/hour. Analysis of the sodium hydroxide solution following each run gave the results shown in Table 1.

**Table 1**

| Example. | Temperature. (°C) | NaOCl (mg/l) | NaCl (mg/l) |
|---|---|---|---|
| 4 | 60 | 14793 | 3900 |
| 5 | 20 | 7239 | 1700 |
| 6 | 0 | 3253 | 1000 |

Conventional hypochlorite solutions containing 14793, 7239 and 3253 mg/litre sodium hypochlorite contain 12130, 5936 and 2667 mg/litre sodium chloride respectively.

### EXAMPLES 7 to 9.

Three runs were carried out under identical conditions except that in each run the pH to which the hypochlorite solution was adjusted was as follows:
Example 7. 6
Example 8. 7
Example 9. 8
The procedure described for example 3 was repeated for each run except that 10 litres of the hypochlorite solution adjusted to the specified pH in the reservoir was caused to flow through compartment 11 at a flow rate of 10 l/hour, and the flow rate of recirculating sodium hydroxide was 10 l/hour. Analysis of the sodium hydroxide solution following each run gave the results shown in Table 2.

**Table 2**

| Example. | pH | NaOCl (mg/l) | NaCl (mg/l) |
|---|---|---|---|
| 7 | 6 | 15108 | 5500 |
| 8 | 7 | 9443 | 1800 |
| 9 | 8 | 10282 | 2400 |

Conventional hypochlorite solutions containing 15108, 9443 and 10282 mg/litre sodium hypochlorite contain 12388, 6349 and 8431 mg/litre sodium chloride respectively.

### EXAMPLE 10.

The procedure described for example 3 was repeated except that 10 litres of a 7.5% w/w sodium hypochlorite solution containing 6% w/w sodium chloride, was adjusted to pH 8 in the reservoir and this solution was caused to flow through compartment 11 at a flow rate of 10 l/hour. The flow rate of recirculating sodium hydroxide solution was 10 l/hour. The sodium hydroxide solution was analysed after all the sodium hypochlorite solution had been passed through compartment 11 and collected in the collection reservoir, and was found to contain 5582 mg/l sodium hypochlorite and 1030 mg/l sodium chloride.Conventional hypochlorite solutions containing 5582 mg/l sodium hypochlorite contain 4577 mg/l sodium chloride.

### EXAMPLE 11.

The procedure of example 10 was repeated except that 201 of a 5% w/w sodium hypochlorite solution containing 4% w/w sodium chloride was adjusted to pH 8.5 in the reservoir and was recycled through the apparatus for 6 and a half hours.

Analysis of the sodium hydroxide solution showed that it contained 10150 mg/litre NaOCl and 760 mg/litre NaCl. Conventional hypochlorite solutions containing 10150 mg/litre sodium hypochlorite contain 7970 mg/litre sodium chloride.

### EXAMPLE 12.

The procedure of example 10 was repeated except that an air stripper was positioned between the hypochlorite reservoir and the heater, such that the pH adjusted hypochlorite solution was passed through the air stripper before being heated and fed to the membrane unit, and the hypochlorite solution was recycled for 3 hours.

Analysis of the sodium hydroxide solution after this time showed that it contained 16000 mg/litre NaOCl and 880 mg/litre NaCl. Conventional hypochlorite solutions containing 16000 mg/litre sodium hypochlorite contain 12564 mg/litre NaCl.

## Claims

1. A process for the separation of a hypohalous acid from an aqueous solution of a hypohalous acid containing halide ions which process comprises contacting the aqueous solution of the hypohalous acid containing halide ions with a first face of a porous membrane of a hydrophobic material and contacting an aqueous liquid with a second face of the membrane.

2. A process as claimed in claim 1 which is effected in an apparatus which comprises a pair of compartments separated by a porous membrane, a first compartment being provided with means for charging an aqueous solution of a hypohalous acid containing halide ions thereto and with means for removing the hypohalous acid depleted solution therefrom, and a second compartment being provided with means for charging aqueous liquid thereto and with means for removing the hypohalous acid or hypohalite solution, substantially free of halide ions therefrom.

3. A process as claimed in claim 2 in which the hypohalous acid solution containing halide ions and the aqueous liquid flow through the apparatus in a counter-current manner.

4. A process as claimed in claim 2 or claim 3 which is effected in an apparatus which comprises a plurality of pairs of compartments and in which the first compartment of each pair of compartments is separated from the second compartment of each pair of compartments by a porous membrane.

5. A process as claimed in claim 4 in which the first compartments of the pairs of compartments are in communication and in which the second compartments of the pairs of compartments are in communication.

6. A process as claimed in claim 4 or claim 5 in which the aqueous hypohalous acid solution containing halide ions is passed through the first compartments sequentially and hypohalous acid deleted solution is removed therefrom, and aqueous liquid is passed through the second compartments sequentially and the hypohalous acid or alkali metal hypohalite solution substantially free of halide ions is removed therefrom.

7. A process as claimed in any one of claims 1 to 6 in which the hypohalous acid containing halide ions is hypochlorous acid containing chloride ions.

8. A process as claimed in claim 7 in which the temperature of the hypochlorous acid solution in contact with the membrane is in the range from about 30°C to about 80°C.

9. A process as claimed in any one of claims 1 to 8 in which the aqueous liquid is water.

10. A process as claimed in any one of claims 1 to 8 in which the aqueous liquid is an aqueous solution of an alkali metal or alkaline earth metal hydroxide.

11. A process as claimed in claim 10 in which the aqueous liquid is sodium hydroxide.

12. A process for the production of hypochlorous acid or an aqueous solution of an alkali metal or alkaline earth metal salt thereof which is substantially free of chloride ions, from an alkali metal hypochlorite solution containing chloride ions which process comprises (a) converting the hypochlorite to hypochlorous acid and (b) contacting the hypochlorous acid solution from step (a) with a first face of a porous membrane of a hydrophobic material and contacting an aqueous liquid with a second face of the membrane.

13. A process as claimed in claim 12 in which the alkali metal hypochlorite solution containing chloride ions is sodium hypochlorite containing chloride ions and the aqueous liquid contacted with the second face of the membrane if step (b) of the process is sodium hydroxide.

14. A process as claimed in claim 12 or claim 13 in which step (a) comprises adjusting the pH of the hypochlorite solution to between 2 and 10.

15. A process as claimed in any one of claims 12 to 14 in which step (a) comprises adjusting the pH of the hypochlorite solution to between 4 and 9.

16. A process as claimed in claim 14 or claim 15 which comprises adding hydrochloric acid to the hypochlorite solution.

17. A process as claimed in any one of claims 14 to 16 in which step (a) is carried out at a temperature in the range from about -10°C to about 80°C.

18. A process for the production of sodium hypochlorite which process comprises (a) chlorinating a sodium hydroxide solution to produce a sodium hypochlorite solution containing sodium chloride, (b) converting the sodium hypochlorite into hypochlorous acid and (c) contacting the hypochlorous acid solution from step (b) with a face of a porous membrane of a hydrophobic material and contacting an aqueous sodium hydroxide with an opposite face of the membrane.
